# EUROPEAN PATENT APPLICATION

(11) **EP 0 901 085 A2**
(43) Date of publication of application: **10.03.1999**
(21) Application number: 98307120.0
(22) Date of filing: 04.09.1998
(51) Int. Cl.: G06F 17/27, G06F 17/28

(54) **An apparatus for, and a method of, identifying collocates**

(30) Priority: 05.09.1997 GB 9718906
(71) Applicant: Sharp Kabushiki Kaisha, Osaka 545-8522 (JP)
(72) Inventor: Poznanski, Victor, Sandford on Thames, Oxford, OX4 4YB (GB); Whitelock, John Peter, Botley, Oxford, OX2 9AZ (GB); Berry, Simon, Sandford-on-Thames, Oxford, OX4 4XX (GB); Corley, Steffan, 54-57 St. Thomas Street, Oxford, OX1 1JP (GB); IJdens, Jan Jaap, Gloucester Green, Oxford, OX12 2DF (GB); Sata, Ichiko, Nara, Nara, 631 (JP); Imai, Akira, Abingdon, Oxfordshire, OX14 2EQ (GB)
(74) Representative: Robinson, John Stuart

(57) **Abstract**

An apparatus for identifying collocates determines whether each word in a phrase is a collocate, and displays the phrase such that collocates in the phrase are displayed in a different manner from non-collocates (for example by underlining collocates). If the phrase contains two or more collocations, the phrase is displayed such that collocates belonging to different collocations are displayed in different manners.

## Description

A collocation is a group of words in a sentence or phrase which are closely related (the words belonging to a collocation are known as collocates). It is frequently desirable to identify a collocation in a section of text to be processed since, for example, a group of words forming a collocation might be translated as a single word in another language. Alternatively, a collocation might be equivalent to a single word in the same language. A collocation can be either sequential - in which case the words forming the collocation are consecutive in the sentence - or non-sequential.

Co-pending UK Patent application No: 9612474.8/2 314 183 and European patent application No: 97304196.5/0 813 160 describe an apparatus for and a method of identifying and translating sequential and non-sequential collocations.

JP-A-6 325 081 discloses a method of displaying a sentence in a source language together with a translation of the sentence into a target language. The words in the target language are aligned with the source language words from which they are translated - this is achieved by inserting spaces between words in the sentence in one, or both, of the source language and the target language.

EP-A-0 189 665 discloses a machine translation system which displays an input sentence in a source language and the equivalent output sentence in a target language. A word or phrase in the input sentence that has two or more possible translations is displayed in different text from the remainder of the sentence.

EP-A-0 199 464 discloses a machine translation system which outputs a sentence in a target language. A word in the output sentence that has two or more possible translations is displayed in different text from the remainder of the sentence. This system does not, however, identify collocates in the input sentence.

Prior art systems are known which indicate sequential look-up or translation candidates - that is, they indicate a sequential collocation in a displayed sentence. The collocation is indicated by underlining or highlighting the words concerned.

An example would be:
(1) John made good use of his salary.
   However, the collocates are not correctly shown in this example. The true collocation is just the words "made", "use" and "of". The word "good" is not part of the collocation, since it can be omitted or replaced by another word (such as "poor", for example). If the collocates were correctly indicated, the sentence would be displayed as follows:-
(2) John made good use of his salary.
   Displaying the sentence in this way, however, introduces a further problem. It is not immediately clear whether "made" and "use of" are separate collocations or whether they are both part of a single collocation.
   This problem also occurs in the following sentence:
(3) The price ranges from three hundred to ten thousand pounds.
   There is no indication that "ranges from" and "to" form one collocation but that "three hundred" and "ten thousand" are two further, different collocations.

A first aspect of the present invention provides an apparatus for identifying collocates in a phrase to be processed, the apparatus comprising:
input means for inputting the phrase to be processed;
processing means for determining, for each word in the phrase, whether a word is a collocate; and
output means for outputting the phrase; wherein the apparatus is adapted to identify collocates belonging to a first collocation in a first manner in the output phrase and to identify collocates belonging to a second collocation in a second manner in the output phrase, the second manner being different from the first manner.

If the phrase contains two or more separate collocations, it will be clear to a user which words belong to each collocation.

A second aspect of the present invention provides an apparatus for identifying collocates in a phrase to be processed, the apparatus comprising:
input means for inputting the phrase to be processed;
processing means for determining, for each word in the phrase, whether a word is a collocate;
output means for outputting the phrase; and
selecting means for selecting a word of the phrase to be processed;
wherein the apparatus is adapted, if the selected word is a collocate, to identify in the output phrase the selected word and the other words of the collocation of which the selected word is a collocate.

Such an apparatus allows for the "dynamic" identification of collocates. A user can investigate the structure of a phrase by finding out whether a particular word in the phrase is a collocate and, if so, which other words in the phrase belong to the same collocation.

The apparatus may be adapted to identify a collocate belonging to the n^{th} collocation (n = 1, 2, 3...) in the output phrase by outputting a marker in proximity to a collocate in the output phrase.

A third aspect of the present invention provides an apparatus for identifying collocates in a phrase to be processed, the apparatus comprising:
input means for inputting the phrase to be processed;
processing means for determining, for each word in the phrase, whether a word is a collocate; and output means for outputting the phrase;
wherein the apparatus is adapted to identify a collocate belonging to the n^{th} collocation (n = 1, 2, 3...) by outputting a marker in proximity to the collocate in the output phrase.

The marker may be "n".

The output means may comprise means for displaying the output phrase.

A fourth aspect of the present invention provides a method of identifying collocates in a phrase to be processed, the method comprising the steps of:
determining, for each word in the phrase to be processed, whether a word is a collocate; and displaying the phrase;
wherein collocates belonging to a first collocation are identified in a first manner in the displayed phrase, and collocates belonging to a second collocation are identified in a second manner in the displayed phrase, the second manner being different from the first manner.

A fifth aspect of the present invention provides a method of identifying collocates in a phrase to be processed, the method comprising the steps of:
determining, for each word in the phrase to be processed, whether a word is a collocate;
displaying the phrase;
selecting a word of the phrase to be processed; and,
if the selected word is a collocate, identifying in the displayed phrase the selected word and the other words of the collocation of which the selected word is a collocate.

A collocate belonging to the n^{th} collocation (n = 1, 2, 3...) may be identified in the displayed phrase by displaying a marker in proximity to the displayed collocate.

A sixth aspect of the present invention provides a method of identifying collocates in a phrase to be processed, the method comprising the steps of:
determining, for each word in the phrase to be processed, whether a word is a collocate; and displaying the phrase;
wherein a collocate belonging to the n^{th} collocation (n = 1, 2, 3...) is identified in the displayed phrase by displaying a marker in proximity to the displayed collocate.

The marker may be "n".

Preferred embodiments of the present invention will now be described with reference to the accompanying drawings, in which:
Figure 1 is a schematic illustration of a first method of identifying collocates according to the present invention;
Figure 2 is a schematic illustration of a second method of identifying collocates according to the present invention; and
Figure 3 is a schematic method of an apparatus according to the present invention.

In a method of the present invention, the first step is to analyse an input sentence, and identify each collocate contained in the sentence. This can be done using any known method, for example such as the method disclosed in co-pending UK patent application No: 9612474.8/2 314 183 and European patent application No. 97304196.5/0 813 160, the contents of which are hereby incorporated by reference. The results of this step can be thought of as a table having 2 rows. In the first row, there is a representation of the input sentence. In the second row, there are collocate number or markings associated with each word. For example:

| Sentence | John | made | good | use | of | his | salary |
|---|---|---|---|---|---|---|---|
| Collocate number | 0 | 1 | 0 | 1 | 1 | 0 | 0 |

A collocate number of 0 indicates that the item is not collocated with any others. Any other numbers indicate the number of the collocation that this word forms part of. So, in the example above, "made, "use" and "of" are both part of collocation 1. In the following example there is more than one collocate:

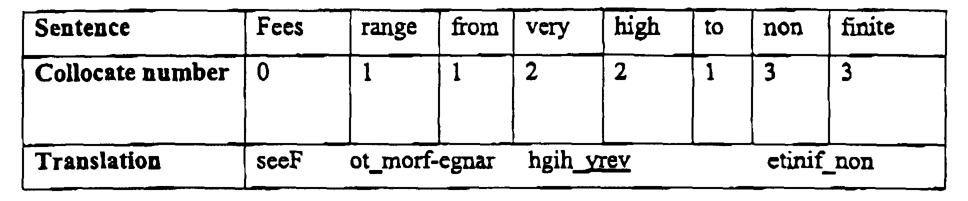

In this case, the words "range", "from" and "to" all share a collocate number of 1, indicating that they are part of the same collocation. Similarly, "very" and "high" form a collocation numbered 2, and "non" and "finite" are part of a collocation numbered 3. "Fees" is the only word in this sentence that is not part of a collocation. This table also includes a third row showing the translation of each word or collocation into some target language.

Once the collocate information for an input sentence has been determined, the next step is to display the sentence in such a way that the collocate information is clearly represented. This enables users easily to identify non-sequential collocations.

In one embodiment of the invention, the collocate number of a word having a non-zero collocate number is displayed adjacent to the word, for example as a superscript:-
(4) Ian made ¹ frequent use ¹ of ¹ his house ² boat ².
   The display of collocate numbers can be combined with underlining, as in the following example:-
(5) Peter didn't have a house boat₁ or a swimming pool₂
   Numbers can be omitted for sequential collocates:-
(6) As the drugs wore off, Susan came₁ slowly to₁
   Many other methods of displaying collocate information exist. For example collocates can be displayed in a different colour. Thus, in example (3) the word "ranges from" and "to" would be displayed in a first colour, "three hundred" would be displayed in a second colour, and "ten thousand" would be displayed in a third colour.

Other possible methods include:-
- use of a coloured background;
- use of coloured underlining;
- use of different type-face;
- use of a different font size;
- use of a different weight of typeface (e.g., using "bold" type);
- use of a different style of typeface (e.g., using italic type); or
- use of different styles of underlining.

More than one of the methods of identifying a collocate in a displayed sentence described above can be used together.

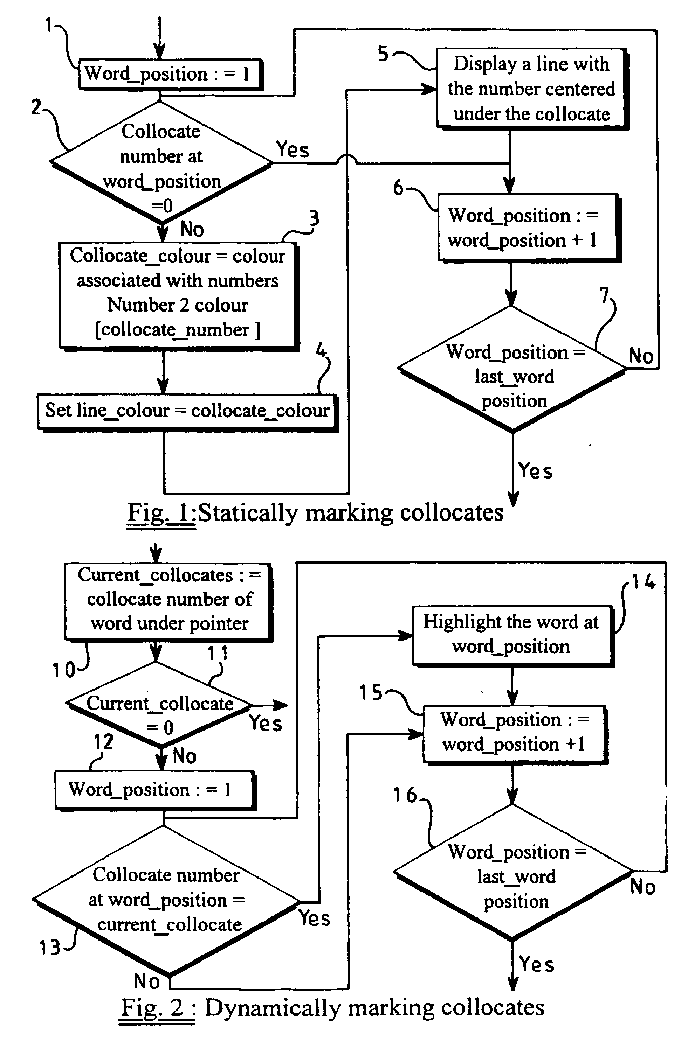

Figure 1 illustrates one embodiment of a method of the present invention. In this embodiment a collocate is identified in a displayed sentence in two ways. Firstly, a collocate is underlined, with the colour of the underlining being different from one collocation to another. Secondly, the collocate number is displayed under a collocate, in the middle of the underlining.

The method of Figure 1 assumes that the collocate number of each word in the phrase has already been determined, for example by a method as described in co-pending UK patent application No. 9612474.8 and European patent application No. 97304196.5.

Initially, the collocate number of the first word of the phrase is compared with zero, at step 2. If the collocate number of the first word is zero - that is, if the first word is not a collocate - the word is not underlined in the displayed phrase, and the collocate number of the first word is not displayed. If the first word is a collocate, however, a colour is assigned to the collocate number of the first word at step 3, and the colour of the underlining of the first word in the displayed image is set to that colour at step 4. This process is then repeated for subsequent words in the phrase, until the determination at step 7 indicates that the process has been performed for all words in the phrase.

The method of assigning a colour to a collocate number is not significant, provided that colours assigned to different collocate numbers are sufficiently different to allow a user to distinguish easily between collocations. One method would be to construct a collocate number to colour array having a size greater than the largest likely collocate number, and assign selected colours to collocate numbers at random in the array.

An alternative method of assigning a colour to a collocate number would be to keep a record of selected collocate number/colour pairs. When a new colour is required, a colour which is significantly different from previously used colours would be chosen. (This is analogous to pseudo-random number generation, where the first selected colour acts as a seed.)

The present invention is not limited to displaying a sentence having just two collocations, but it can be applied to a sentence having three or more collocations.

Another embodiment of the present invention provides a 'dynamic' display method, in which the collocate information displayed depends on the user's choice. In this method collocate information is determined as outlined above, but the information is initially not displayed with the input sentence - that is, all words of the sentence are displayed in the same manner.

The next step is for a user to select a word of the input sentence. If the sentence is displayed on a VDU the user can select a word by clicking the mouse on the word, for example. If the selected word is a collocate, the selected word and the other words in the collocation would be highlighted. Thus, for the sentence:-
(7) "The chancellor kept interest rates to a minimum"
   the words "kept", "to", "a", and "minimum" would be highlighted if any one of these words were selected. If, on the other hand, either "interest" or "rates" were selected then both these words would be highlighted.

Selecting the word "The" or "chancellor" would not affect the display of the input sentence.

Figure 2 illustrates a method of 'dynamic' identification of collocates. It assumes that the step of determining the collocate number of each word in the input phrase has already been carried out.

At step 10 the collocate number of the word in the input phrase selected by the user is 'looked up', and at step 11 this collocate number is compared with zero. If it is zero - that is, if the selected word is not a collocate - no words in the displayed phrase are highlighted.

If it is determined at step 11 that the selected word is a collocate - i.e. it has a non-zero collocate number - the collocate number of the first word in the input phrase is compared with the collocate number of the selected word at step 13. The first word is highlighted in the output phrase at step 14 if, and only if, it has the same collocate number as the selected word. It can be highlighted in any one of the ways described above.

The comparison of the collocate number with the collocate number of the selected word is then repeated for the second and subsequent words in the input phrase, until the result of the determination at step 16 shows that the comparison has been carried out for all words in the input phrase. All words in the input phrase having the same collocate number as the selected word will have been highlighted in the output phrase, following 'yes' determinations at step 13 for each word in the collocation.

One advantageous feature of this invention is that when it displays a sentence having a non-sequential collocation only the words making up the collocation are "highlighted", as shown in example (2). In contrast, in the prior art a non-sequential collocation is not displayed correctly, as shown in Example (1).

The methods of this invention can be carried out by an apparatus similar to that described in the above-mentioned co-pending UK Patent Application No. 9612474.8/ 2 314 183 and European Patent Application No. 97304196.5/0 813 160.

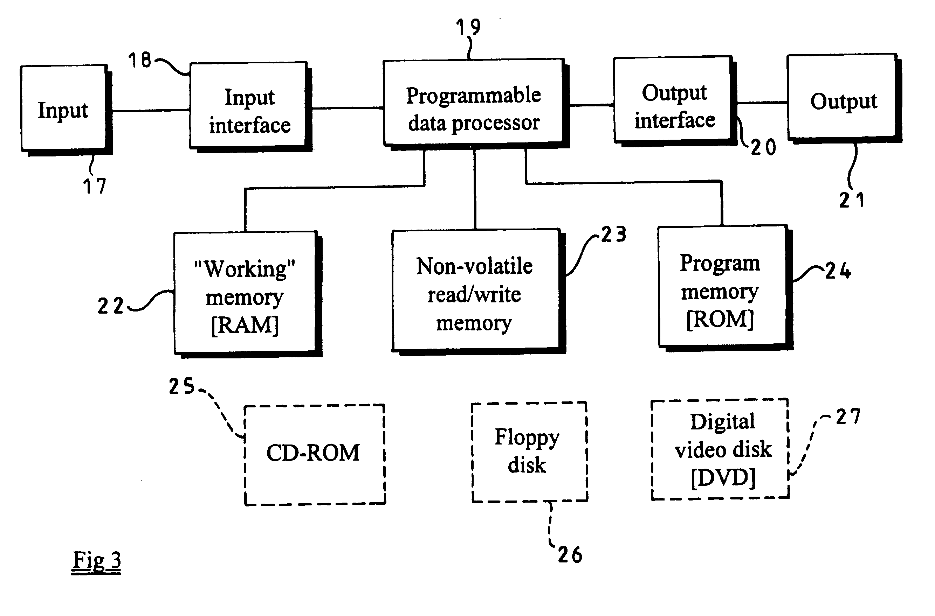

Figure 3 is a schematic illustration of an apparatus suitable for carrying out the present invention. It has an input terminal 17 for inputting a section of text to be processed. Alternatively, other means capable of inputting a section of text, for example a voice recognition system, or an Optical Character Reader could be used.

The input terminal 17 is connected to a programmable data processor 19 by means of an input interface 18. The processor is capable of analysing the input section of text in the manner described in UK Patent Application No. 9612474.8 and European Patent Application No. 97304196.5.

The data processor 19 is connected to a random access memory (RAM) 22, a nonvolatile read/write memory 23 and a program memory 24. The program memory is a read only memory (ROM). The RAM 22 acts as a "working" memory, and contains a database. The data processor 19 may also be connectable to an external database such as, for example, a CD-ROM 25, a "floppy" disc 26, or a digital video disc (DVD) 27.

The apparatus further comprises an output device 21, which is connected to the processor 19 by an output interface 20. This output device could be, for example, a display device or a printer.

As stated above, the processor 19 is able to analyse an input section of text in the manner described in UK Patent Application No. 9612474.8 and European Patent Application No. 97304196.5. The apparatus of the present invention is further adapted to identify collocates in the output text, for example in one of the ways described hereinabove. For instance, in the apparatus of Figure 3, the processor 19 is adapted to determine which words in the input text are collocates and deliver the results to the output interface 20 for outputting by the output device 21.

## Claims

1. An apparatus for identifying collocates in a phrase to be processed, the apparatus comprising: -
input means (17) for inputting the phrase to be processed;
processing means (19) for determining, for each word in the phrase, whether a word is a collocate;
and
output means (21) for outputting the phrase;
wherein the apparatus is adapted to identify collocates belonging to a first collocation in a first manner in the output phrase, and to identify collocates belonging to a second collocation in a second manner in the output phrase, the second manner being different from the first manner.

2. An apparatus for identifying collocates in a phrase to be processed, the apparatus comprising:
input means (17) for inputting the phrase to be processed;
processing means (19) for determining, for each word in the phrase, whether a word is a collocate;
output means (21) for outputting the phrase; and
selecting means for selecting a word of the phrase to be processed;
wherein the apparatus is adapted, if the selected word is a collocate, to identify in the output phrase the selected word and the other words of the collocation of which the selected word is a collocate.

3. An apparatus for identifying collocates as claimed in claim 1 or 2 and further adapted to identify a collocate belonging to the n^{th} collocation (n=1,2,3...) by outputting a marker in proximity to the collocate in the output phrase.

4. An apparatus for identifying collocates in a phrase to be processed, the apparatus comprising: -
input means (17) for inputting the phrase to be processed;
processing means (19) for determining, for each word in the phrase, whether a word is a collocate; and
output means (21) for outputting the phrase;
wherein the apparatus is adapted to identify a collocate belonging to the n^{th} collocation (n = 1, 2, 3...) by outputting a marker in proximity to the collocate in the output phrase.

5. An apparatus as claimed in claim 3 or 4 wherein the marker is "n".

6. An apparatus as claimed in any preceding claim wherein the output means comprises means for displaying the output phrase.

7. A method of identifying collocates in a phrase to be processed, the method comprising the steps of:-
a) determining, for each word in the phrase to be processed, whether a word is a collocate;
and
b) displaying the phrase;
wherein collocates belonging to a first collocation are identified in a first manner in the displayed phrase, and collocates belonging to a second collocation are identified in a second manner in the displayed phrase, the second manner being different from the first manner.

8. A method of identitifying collocates in a phrase to be processed, the method comprising the steps of:
a) determining for each word in the phrase to be processed, whether a word is a collocate;
b) displaying the phrase;
c) selecting a word of the phrase to be processed; and
d) if the selected word is a collocate, identifying in the displayed phrase the selected word and the other words of the collocation of which the selected word is a collocate.

9. A method of identifying collocates as claimed in claim 7 or 8 wherein a collocate belonging to the n^{th}, collocation (n=1,2,3...) is identified in the displayed phrase by displaying a marker in proximity to the displayed collocate.

10. A method of identifying collocates in a phrase to be processed, the method comprising the steps of:-
a) determining for each word in the phrase to be processes whether a word is a collocate; and
b) displaying the phrase;
wherein a collocate belonging to the n^{th} collocation (n - 1, 2, 3...) is identified in the displayed phrase by displaying a marker in proximity to the displayed collocate.

11. A method as claimed in claim 9 or 10, wherein the marker is "n".
